Europäisches Patentamt

European Patent Office

Office européen des brevets

(11) Publication number: 0 585 754 A1

## (12) EUROPEAN PATENT APPLICATION

(21) Application number: 93113333.4

(22) Date of filing: 20.08.93

(51) Int. Cl.5: G01N 15/14

(30) Priority: 04.09.92 US 940587

(43) Date of publication of application:
09.03.94 Bulletin 94/10

(84) Designated Contracting States:
DE FR GB IT

(71) Applicant: BECTON, DICKINSON & COMPANY
One Becton Drive
Franklin Lakes New Jersey 07417-1880(US)

(72) Inventor: Hoffman, Robert Alan
2129 Mars Road
Livermore, California 94550(US)
Inventor: Stokdijk, Willem
557 Tyler
Livermore, California 94550(US)

(74) Representative: Rambelli, Paolo et al
Jacobacci-Casetta & Perani S.p.A.
Via Alfieri 17
I-10121 Torino (IT)

(54) Method and apparatus for measurement of fluorescence pulse area/peak for cell size analysis.

(57) A flow cytometry device is disclosed. The flow cytometry device has equipment for discriminating between particles of different sizes. The flow cytometry device detects fluorescence emitted by the particles and produces electrical pulses in response to the passage of the particles through a light beam. Electronic circuitry integrates the pulses. The integrated pulses are divided by the pulse amplitudes by subtraction of the logs of the integrals and pulse amplitudes to obtain a size parameter. The device has means to discriminate between particles having different size parameters.

FIG-1

## FIELD OF THE INVENTION

This invention relates to the field of flow cytometry. In particular, it relates to a method of distinguishing between cells of interest in a dilute cell sample and other particles in the sample such as debris, different cells and fluorescence from unbound antibodies.

## BACKGROUND

A flow cytometer analyzes the fluorescence of specially labeled or autofluorescent cells in order to identify and count certain classes of cells in a sample such as lymphocytes, for example CD3+ and CD4+ cells. The labeled or autofluorescent cells are illuminated with light and respond by emitting pulses of fluorescent light as they pass through a light beam. The characteristics of the fluorescence vary according to the type of cell.

A cell sample in a suspension may include several types of particles. In addition to particles of interest such as lymphocytes, other particles such as red blood cells, latex beads and debris may also be present. Each cell passing through the cytometer may produce a fluorescence event (i.e. a cell emitting a particular fluorescent wavelength and intensity). The prior art includes methods of determining and displaying several parameters of light emitted and scattered by cells under analysis in a flow cytometer. The occurrence and display of a fluorescence event does not readily permit discrimination of cells from debris and other cells of interest in the cell suspension because the debris may emit the same intensity of fluorescence as the cells of interest. Also, when the sample contains many more non-fluorescent particles than fluorescent particles, it may not be practical to use light scatter to discriminate between cells of interest, debris and noise.

It is therefore desirable to measure other parameters of the fluorescence emitted by the cells and use those parameters to eliminate or "gate out" fluorescent events produced by cells or particles which are not of interest. The present invention is directed to the determination of one such parameter and its use to eliminate fluorescent particles and noise events which are not of interest.

This invention is especially useful in the counting of white blood cells (lymphocytes) in whole blood samples to track the progress of AIDS in a patient. Some lymphocytes (e.g. CD3+ cells) in a whole blood sample stained with fluorescently labeled antibodies as well as fluorescent debris particles and fluorescent noise from unbound antibodies in the sample produce similar fluorescence intensities and wavelengths. In prior art devices, light scattering was used to distinguish lymphocytes from other particles. However, light scattered by red cells may interfere with light scattered by lymphocytes in cases where red cells greatly outnumber lymphocytes. This is particularly true for samples from AIDS patients in which red cells are about 1,000 to 10,000 times more numerous than the subsets of lymphocytes of interest. In such cases, the interference of light scatter from coincident red cells and lymphocytes could only be avoided by diluting the blood sample by a factor of between about 1:50 and 1:100 and analyzing the sample at a low rate (e.g. less than 1μl per second). Using prior art devices immunofluorescently stained lymphocytes could only be counted reliably and at high count rates if the red cells were first lysed. Lysing of red cells makes the detection and counting of white cells more difficult because in some cases the lysing agent must be neutralized at a critical time to avoid lysing the white cells as well as the red cells. With some types of lysing agents, red cell debris interferes with light scatter measurements. In any case, lysing adds time and complexity to the process of sample preparation.

Since white blood cells, random noise and fluorescent debris have different size parameters, the determination of the size parameter using this invention allows cells of interest (typically lymphocytes) to be counted without the need for lysis of the red blood cells and light scatter detectors for distinguishing lymphocytes, from other fluorescence events. For the same reason, fluorescent events produced by debris which is usually present in a cell suspension can also be gated out electronically, allowing cells of interest such as leukocytes to be counted. Using the present invention, white cells can thus easily be counted in whole blood specimens, making the counting process cheaper and easier.

## SUMMARY OF THE INVENTION

The invention relates to the measurement of the fluorescence emitted by each stained cell as it passes through a flow chamber and is illuminated. The fluorescence is sensed by a photomultiplier tube and represented by an electronic pulse or waveform having a certain duration, shape and amplitude, all dependent on the type of cell under analysis.

The electronic pulse representing the fluorescence emitted by the cell under consideration is used to determine the "size parameter" of the cell. This size parameter is defined as:

$$\log \frac{(\underline{pulse\ area})}{(pulse\ peak)}$$

or log [pulse area] - log [pulse peak]

Pulse area is obtained by integrating the pulse or waveform. The fluorescence size parameter provides an estimate of the actual size of the stained particles even where many unstained particles are analyzed coincident with each stained particle.

If it is known that the cells of interest have size parameters in a certain range, the size parameter can be used to eliminate cells which do not have such size parameters and are therefore not of interest. Since the size parameter is indicative of the size of the particle passing through the flow chamber, the invention can be used to distinguish between particles having different sizes. For example, granulocytes can be distinguished from smaller lymphocytes. It is also found that the size parameter of non-particulate noise caused by unbound fluorescent antibodies in the stained cell sample is greater than that of lymphocytes and other cells of interest. The invention is thus useful for eliminating noise.

The invention is a method and apparatus for detecting fluorescence emitted by fluorescently labeled cells in whole blood, determining the size parameter of each cell by obtaining an electrical pulse for each particle passing through a light beam, measuring the area of the pulse, dividing the area by its peak value to obtain a size parameter and gating out cells which have size parameters in a predetermined range. In a specific embodiment of the invention, this is accomplished by a method of (1) taking the log of the peak value of a fluorescent pulse produced by a cell, (2) integrating the pulse and taking the log of the integral and (3) subtracting the log of the peak from the log of the integral. Fluorescence events having size parameters in a certain range may thus be displayed or eliminated and the particles of interest can be analyzed.

## BRIEF DESCRIPTION OF THE DRAWINGS

Fig. 1 is a perspective view of the basic components of a typical flow cytometry device incorporating the invention;
Fig. 2 is a block diagram of the electronic components of the invention;
Fig. 3 is a diagram of the fluid flowing through the flow chamber of the invention;
Fig. 4a-h are schematic diagrams of the main electronic components of the invention;
Fig. 5 is a timing diagram for the control logic unit of the invention;
Fig. 6a is a dot plot of fluorescence events in a sample analysed without the invention;
Fig. 6b is a histogram showing numbers of events plotted against the size parameter determined by using the invention;
Fig. 6c is a dot plot showing fluorescence events, events having larger size parameters being gated out.

## DETAILED DESCRIPTION

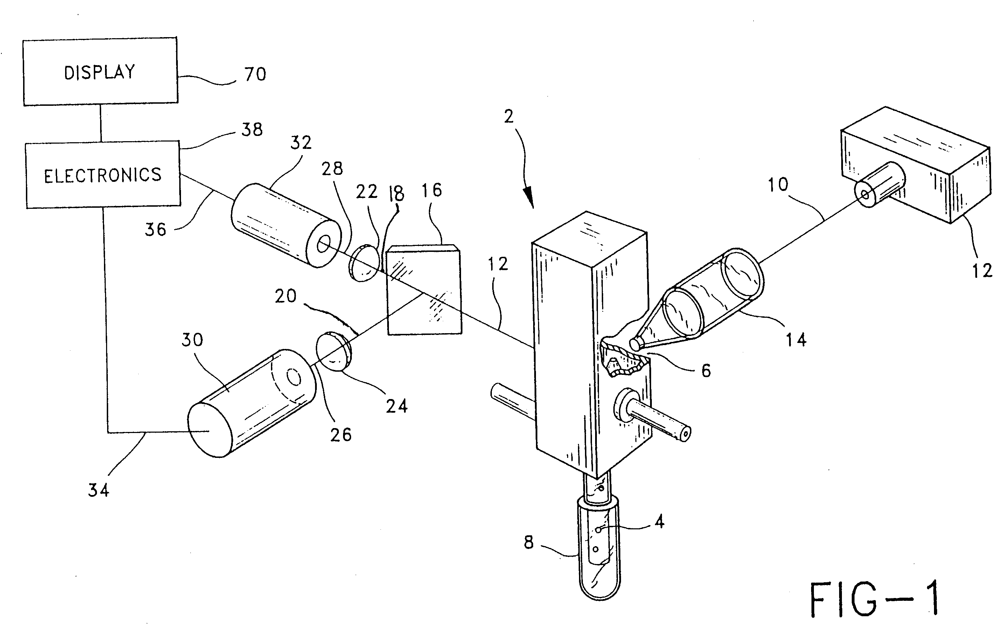

The configuration of a typical flow cytometry device 2 is shown in Fig. 1. A device of this type is shown in U.S. Patent No. 5,030,002 which is incorporated herein by reference. The device comprises the following basic elements which are inter-related in the manner described herein.

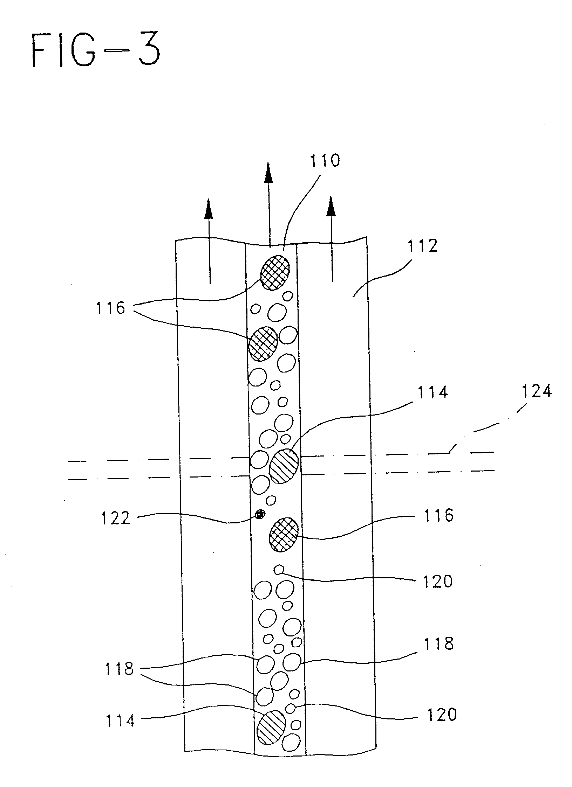

Reservoir 8 contains a suspension of particles or cells 4 as shown in Fig. 3 which are to be analyzed using flow cytometry device 2. Unless the context requires otherwise, the term "cells" will be understood to encompass both cells and other particles in the suspension. The suspension is preferably made up of whole blood diluted with a diluent of antibodies reactive with specific subclasses of white blood cells. The blood is diluted in a ratio of whole blood to diluent of 1:7 to 1:10 (preferably 1:7). The red cells are not lysed. Cells 4 are labeled with fluorescent markers prior to being placed in reservoir 8. Cells 4 are transported through flow chamber 6 from reservoir 8 by means of a pump (not shown) in a manner well known in the art and shown, for example, in U.S. Patent No. 5,030,002 and 4,844,610 which are incorporated by reference. Cells 4 are ensheathed by a sheathing liquid such as saline solution in a well known manner. Cells 4 thus flow through flow chamber 6.

Fig. 3 is an illustration of the sample stream as it passes through light beam 10. The length of zone 124 (Fig. 3) in which the cell passes through the light beam is preferably less than or equal to the length of the cells of interest. For human lymphocytes such as CD3+ and CD4+ cells the length of this zone is approximately 7μm.

Sample flow stream 10 is ensheathed in ensheathing fluid 112. Sample flow stream 110 is made up of cells of interest 114, large fluorescent debris 116, non-fluorescent particles (e.g. red blood cells) 118, small fluorescent debris 120 and fluorescent latex beads 122.

As a particular cell flows through flow chamber 6, it is illuminated by incident light beam 10. Light beam 10 is produced by laser 12 which provides a light beam at a specific wavelength. Preferably this wavelength is 544nm. Lens 14 may be interposed between laser 12 and flow chamber 6 to focus light beam 10.

As a suitably stained or autofluorescent cell passes through light beam 10, it emits a pulse of fluorescent light and scattered light. The fluorescent pulse is collected in a direction approximately 90° to the incident light beam 10. The collected light is represented in Fig. 1 as light beam 12. Since it is desirable to measure more than one wavelength of fluorescent light, light beam 12 is split by beam splitter 16 into beams 18 and 20.

Light beam 18 is filtered by filter 22 to provide a yellow beam 28 of wavelength approximately 570-620nm. Light beam 20 is filtered by filter 24 to provide a red beam 26 of wavelength approximately 645-700nm. Yellow beam 28 is detected by photomultiplier tube (PMT) 32. Red beam 26 is detected by PMT 30. PMTs 30 and 32 produce current signals 34 and 36 in response to the intensities of beams 26 and 28. These signals are fed into electronics 38 for processing as further described herein. Electronics 38 comprise two channels, channel I for red beam 26 and channel II for yellow beam 28. Channel I determines the pulse integral, the pulse peak and the size parameter. Channel II determines the pulse integral only.

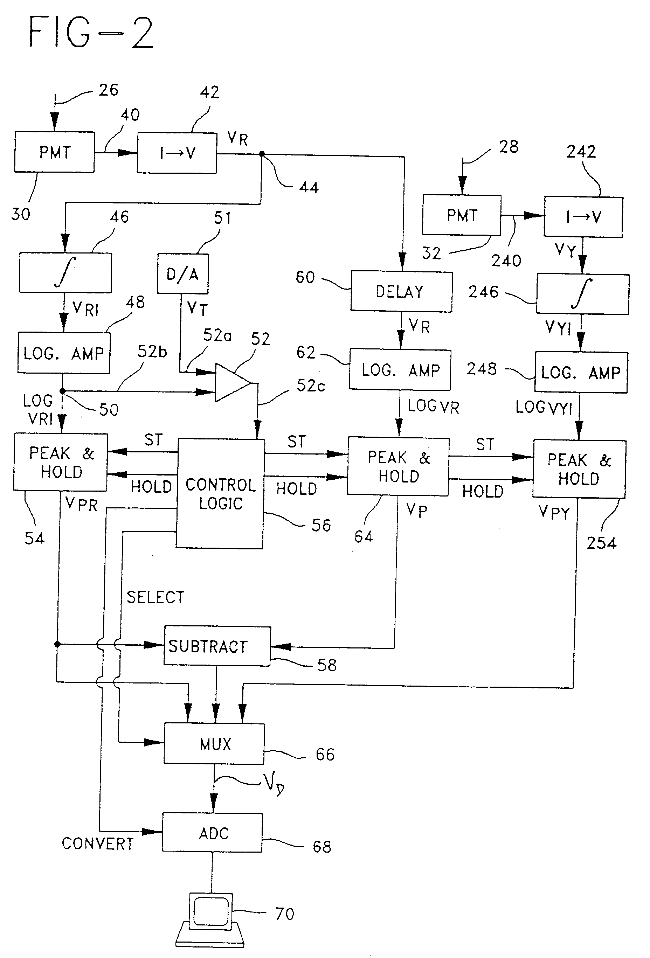

For clarity, each channel will be described separately. A block diagram of channels I and II is shown in Fig. 2. Preferred components are indicated in parentheses.

### Channel I

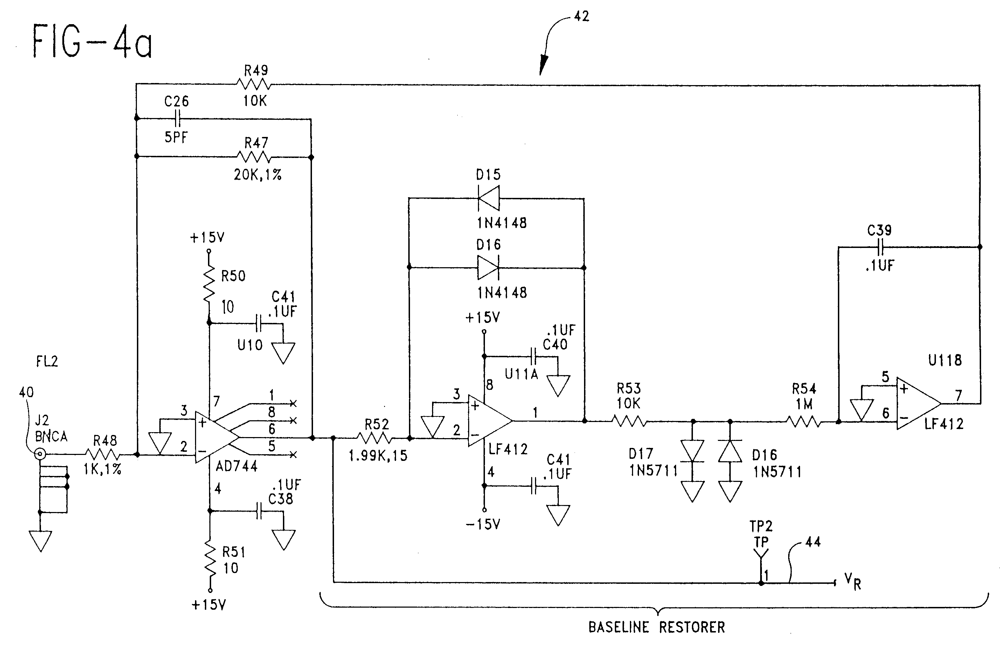

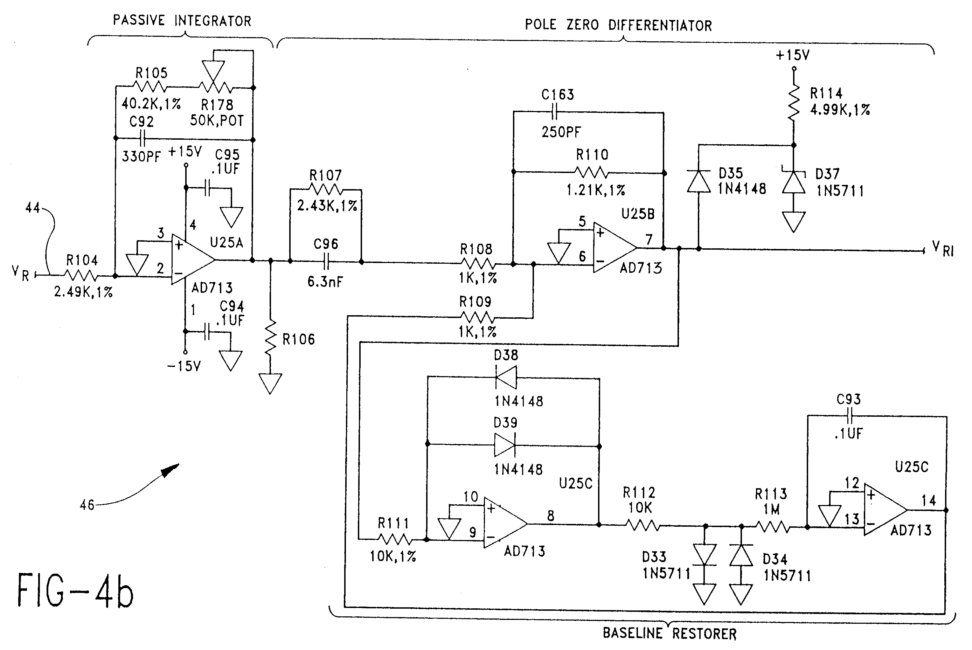

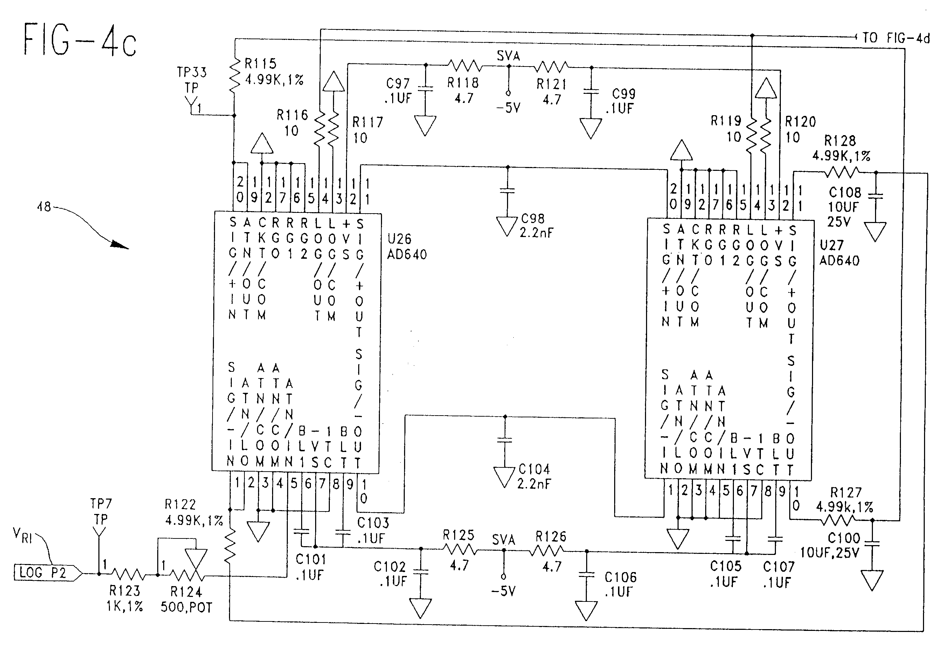

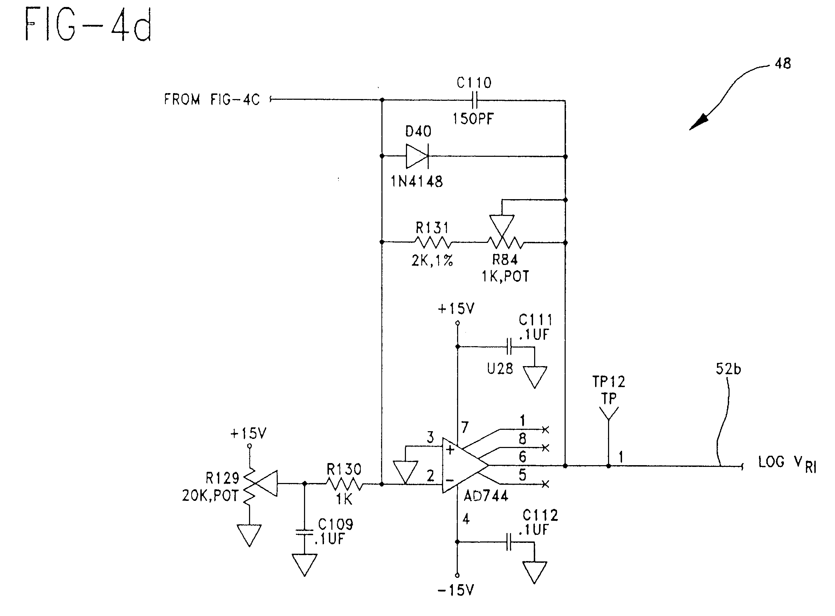

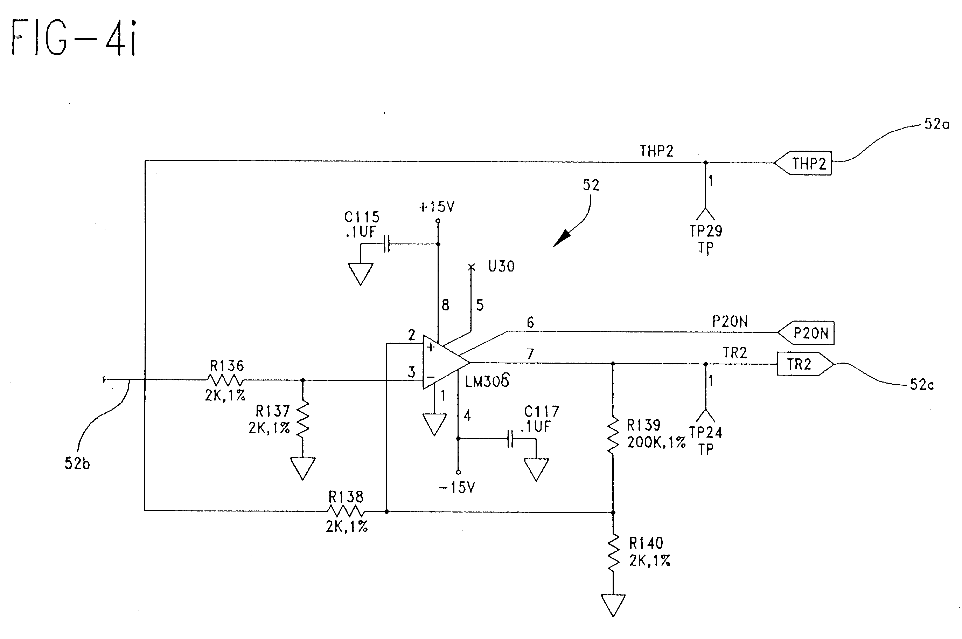

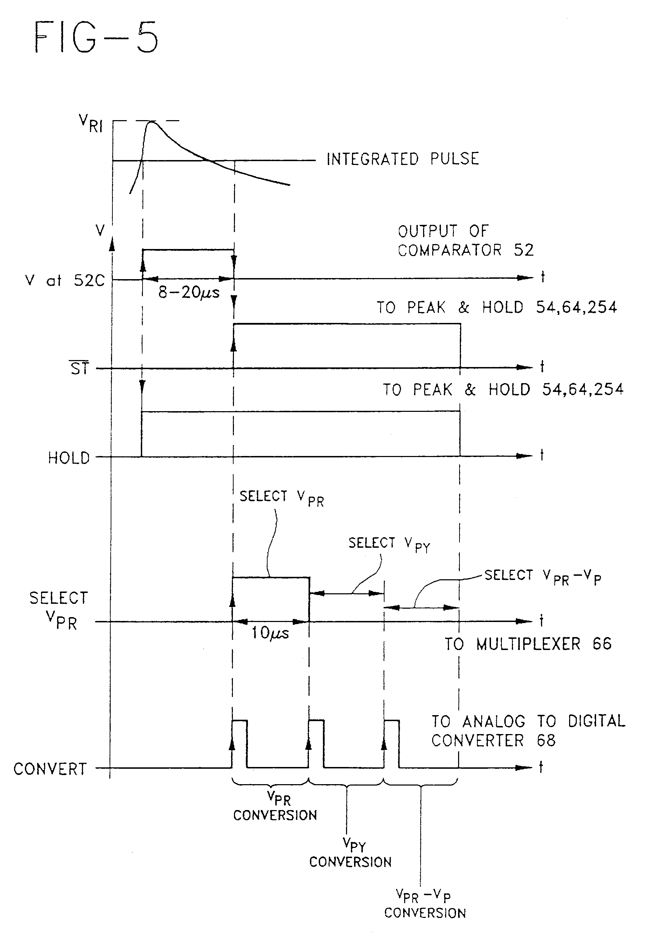

Output 40 of PMT 30 is a pulsed current of between 0 and 0.5mA. In order for output 40 of PMT 30 to be processed, it is converted into voltage $V_R$ by current to voltage converter 42 (See Fig. 4a). Current to voltage converter 42 includes a baseline restorer circuit. Current to voltage converter 42 is shown in more detail in Fig. 4a. $V_R$ is fed into integrator 46 shown in detail in Fig. 4b (passive integrator with pole - zero differentiator in the form of a Quad op-amp to compensate for long delay time) which taps $V_R$ at node 44. Integrator 46 is shown in more detail in Fig. 4b. The output of integrator 46, $V_{RI}$ (See Fig. 5) is fed into log amplifier 48 (4 decade type made up of two AD640's) shown in detail in Figs. 4c and d. The output of log amplifier 48 is log $V_{RI}$' a voltage signal proportional to the logarithm of $V_{RI}$' the integral of $V_R$. Log $V_{RI}$ is tapped at node 50 and fed into comparator 52 (See Fig. 4b) whose function will be described herein.

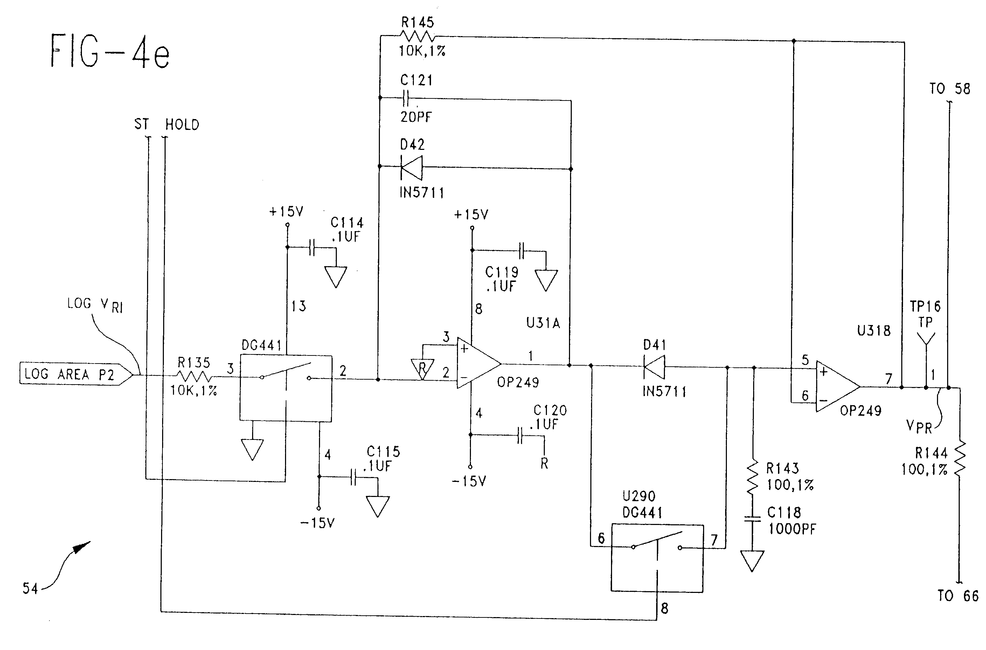

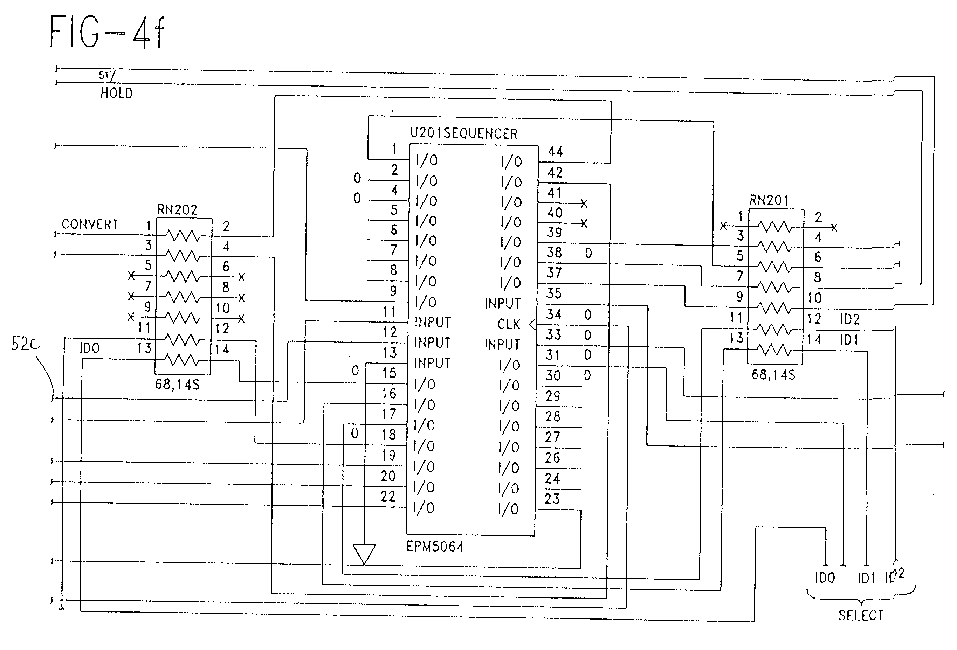

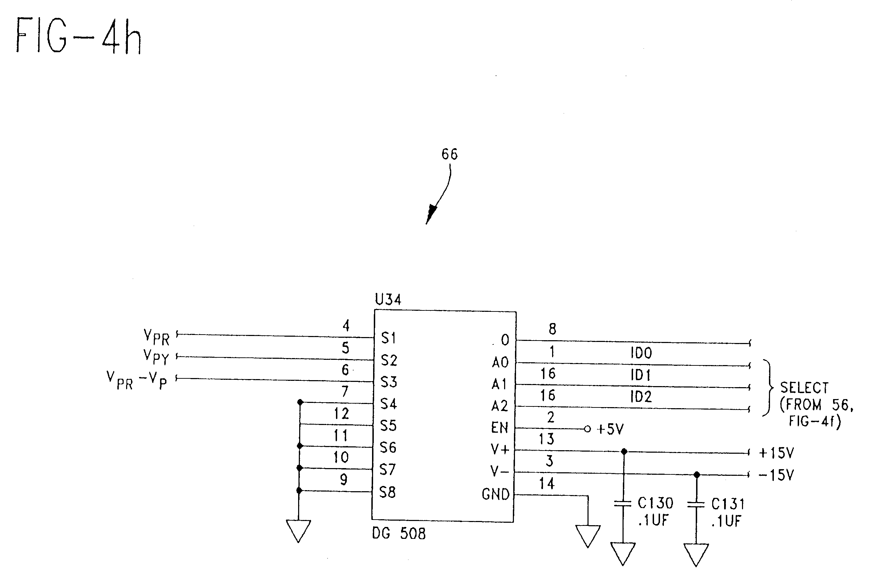

Log $V_{RI}$ is also fed into peak and hold circuit 54 shown in more detail in Fig. 4e. Peak and hold circuit 54 detects the peak value of log $V_{RI}$ over a time interval during which log $V_{RI}$ exceeds threshold voltage 52a. Peak and hold circuit holds log$V_{RI}$ for the time it takes analog to digital converter 68 to convert the analog peak values $V_{PR}$' $V_P$ and $V_{PY}$ to digital values. Peak and hold circuit 54 is controlled by control logic circuit 56 which is a digital programmable logic device (See Fig. 4f). Control logic circuit 56 is enabled by the output 52c of comparator 52 (See Fig. 4i). The output $V_T$ is set at 2-3V. This voltage is set sufficiently high so that noise events will not be detected but sufficiently low for fluorescent events, to be detected. The threshold voltage is typically set by computer 70 based on the level of the first few thousand fluorescent events of the sample under analysis. Log $V_{RI}$ is fed into input 52b of comparator 52. Comparator 52 produces a digital output 52c when the level of log $V_{RI}$ exceeds a threshold value of $V_T$.

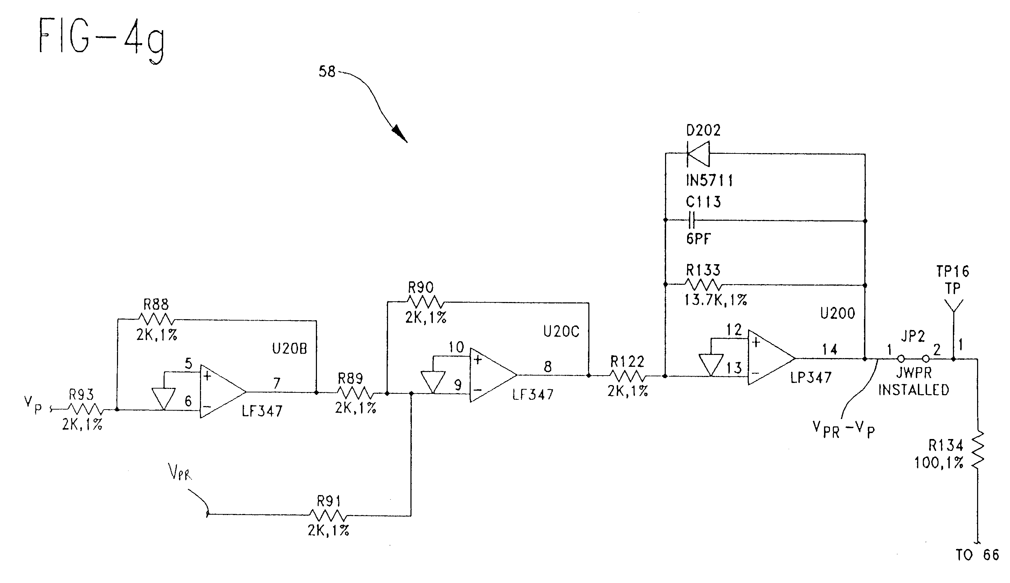

The operation of control logic 56 is shown in the timing diagram in Fig. 5. When control logic 56 is enabled, it sends a signals ST, to peak and hold circuit 54 which causes peak and hold circuit 54 to detect the peak value of log $V_{RI}$ over a time interval during which log $V_{RI}$ exceeds $V_T$. The peak value $V_{PR}$ is held by peak and hold 54 when control logic 56 generates the HOLD signal. $V_{PR}$ is fed into subtractor 58 (see Fig. 4g). After the time interval during which analog peak values $V_{PR}$' $V_P$ and $V_{PY}$ are digitized by analog to digital converter 68, control logic 56 resets peak and hold circuit 54 by generating the HOLD signal.

$V_R$ is also fed into delay circuit 60 via node 44b. Delay circuit 60 compensates for the delay introduced by integrator 46. Delayed $V_R$ is fed into log amplifier 62. Log amplifier 62 produces output log $V_R$ which is proportional to the logarithm of $V_R$. Log $V_R$ is thereafter fed into peak and hold circuit 64 which is substantially identical to peak and hold circuit 54. Peak and hold circuit 64 is likewise controlled by control logic 56. The output of peak and hold circuit 64, $V_P$ is fed into subtractor 58. Subtractor 58 subtracts $V_P$ from $V_{PR}$. The subtraction of $V_P$ from $V_{PR}$ results in the size parameter equal to the logarithm of the integral of the pulse which is detected for each cell divided by the peak value of that pulse since subtraction of logarithms is equivalent to division. A size parameter may also be determined by subtraction of $V_P$ from $V_{PR}$ or log of the division of $V_{RI}$ by $V_R$. An equivalent parameter may also be obtained by the subtraction of $V_{PR}$ from $V_P$ or the log of the division of $V_R$ by $V_{RI}$.

It should be noted that the process described above is performed for each particle detected by comparator 52. Thus a size parameter is determined for each detected particle. The size parameters are digitized by analog to digital converter 68 under the control of control logic 56. The digitized size parameters are correlated by computer 70 with the fluorescent events to which they relate and the fluorescent events are displayed by computer 70.

### Channel II

Channel II is similar to channel I, but determines only the integral of the yellow fluorescence pulse. PMT 32 generates a current 240 which is converted by current to voltage converter 242 into Vy. Vy is integrated by integrator 246 and the log of resultant $V_{YI}$ is generated by log amplifier 248 to produce log $V_{YI}$. The peak value $V_{PY}$ is generated by peak and hold circuit 254 which is controlled by control logic 56 in the same way as peak and hold circuits 54 and 64. Current to voltage converter 242, integrator 246, log amplifier 248 and peak and hold circuit 254 all correspond to their counterparts 42, 46, 48 and 54 in Channel I.

$V_{PR}$, $V_{PY}$ and size parameter $V_{PR}$-$V_P$ are fed into multiplexer 66 (See Fig. 4b). Multiplexer 66 allows each of those voltages to be gated sequentially through to analog to digital converter 68 for digitization. The digitized signal $V_D$ is fed into computer 70. The values of $V_{PR}$, size parameter $V_{PR}$-$V_P$ and $V_{PY}$ can be stored and displayed in a manner such as shown in U.S. Patent 4,845,653 which is incorporated herein by reference.

Computer 70 may be used to display the events detected by PMT's 30 and 32 and can be programmed to display only those events having size parameters within a certain range for example using HP9000 model and PC LYSYS II software, available from Becton Dickinson Immunocytometry Systems, 2350 Qume Drive, San Jose, California.

The embodiment described is intended to be illustrative and not limiting. The full scope of the invention is to be determined by the appended claims and their equivalents.

## EXAMPLE

The following is an example of the use of the invention for analysis of a sample of whole blood:

It was desired to accurately count lymphocyte subsets in patients with low white blood cell counts such as AIDS patients infected with HIV. To test the use of the size parameter the software program PC LYSYS was used to analyze several HIV patient data files acquired on a prototype flow cytometer.

Sample Preparation:

50 microliters of whole human blood were added to 400 microliters of a reagent containing fluorescent reference beads and fluorescently conjugated monoclonal antibodies Leu2a conjugated to phycoerythrin and Leu4 conjugated to the tandem fluorochrome phycoerythrin/CY5. The Leu2a reacted with the CD8 antigen on lymphocytes and provided primarily yellow fluorescence. The Leu4 antibody reacted with the CD3 antigen on lymphocytes and provided primarily red fluorescence. The reference beads were approximately $2\mu m$ in diameter and produced both yellow and red fluorescence. A known number of the fluorescent reference beads in the sample allowed determination of the absolute number of fluorescent cells per microliter of blood. Samples were incubated a minimum of 30 minutes at room temperature in the dark. Following the incubation, 50 microliters of 5% paraformaldehyde fixative was added, and the sample was then analyzed using the present invention.

Analysis using the invention

A helium neon laser emitting green light at 543.5 nm illuminated the sample stream. The laser was focused on the sample stream to a height of approximately $7\mu m$ in the direction of sample flow. The integrated red and yellow fluorescence as well as the size parameter for the red fluorescence were measured. The integrated red fluorescence was used as a threshold parameter for triggering acquisition of data by control logic 56. Only fluorescent events with integrated red fluorescence above the threshold were acquired. The fluorescence and size parameter data for each cell analyzed were stored as a file for subsequent analysis with the PC LYSYS software.

Using the present invention, gating out events with very large "size" parameters always removed what was believed to be noise and debris counts. These noise and debris counts ranged from 1-80 counts per microliter of whole blood. While this was not considered significant in normal samples, such noise and debris counts are a major source of error in patients, such as AIDS patients, with T-cell counts in the range of 100-300 per microliter of whole blood.

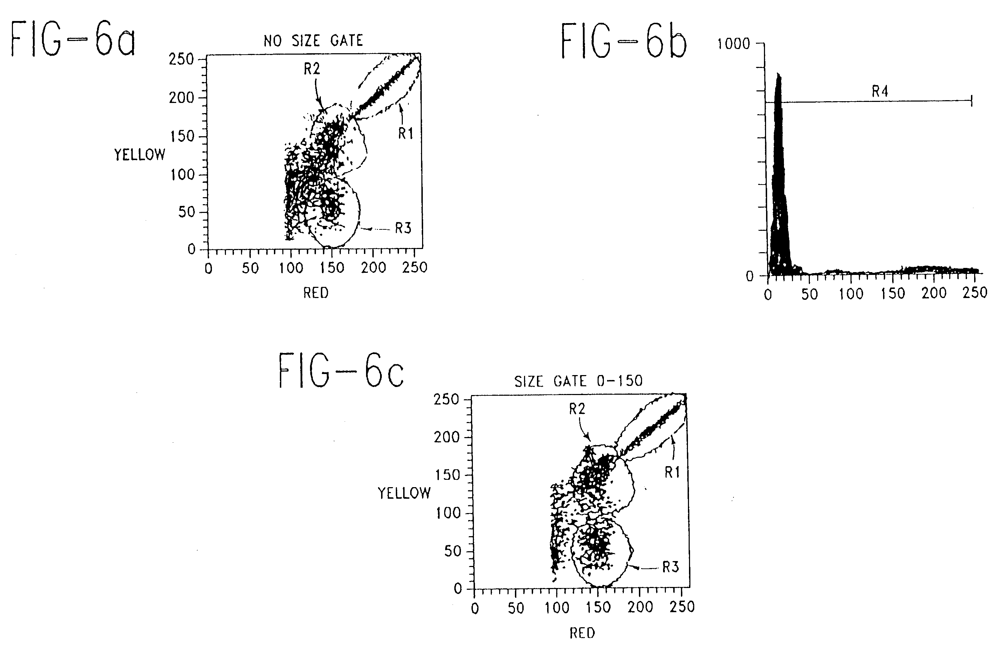

Figures 6 a, b and c show an example of size gating on a CD8/CD3 sample. Figure 6a shows the yellow vs. red fluorescence data displayed using PC LYSYS software (57,339 events displayed) without the use of the present invention. A dot in the figure represents the occurrence of at least one event with particular intensities of yellow and red fluorescence. Region R1 encloses events from reference beads. Region R2 indicates where cells stained with both CD3 and CD8 should occur. Region R3 indicates where cells stained only with CD3 should occur. A noise and debris cluster extends into the CD8 counting region (R2) and adds to the CD8 count. The CD8 count determined from PC LYSYS was 110/microliter using region R2 as the CD8 + counting region.

A gate was set on the size parameter so that only events falling within the region defining the gate were analyzed for yellow and red fluorescence. Figure 6b is a histogram of the number of events versus the magnitude of the size parameter. Three peaks in the size histogram correspond to beads, lymphocytes, and debris plus noise. When a gate R4 was set on the size parameter to include only events in size channels 0-250, as shown in Figure 6b, the count for CD8 dropped to 91. Size gates of 0-200 and 0-150 gave CD8 counts of 86/microliter and 85/microliter respectively. It appears that no noise or debris with size less than channel 200 was in the CD8 counting region. Figure 6c shows the yellow fluorescence vs. red fluorescence dot plot with the size gate set on channels 0-150. This size gate removed essentially all the noise and debris that interferes with fluorescence analysis but apparently removes no cells.

**Claims**

1. A method of distinguishing particles in a blood sample comprising the steps of:
    obtaining a sample of substantially whole blood;
    labeling the sample with fluorescent markers;
    causing the sample to flow through a flow chamber;
    illuminating the sample with light, so that particles in the sample emit fluorescent light;
    generating an electrical signal in response to the fluorescent light;
    obtaining the integral of the electrical signal;
    obtaining the peak value of the electrical signal;
    dividing the integral by the peak value to obtain a size parameter;
    using the size parameter to distinguish between different particles in the blood sample.

2. The method of claim 1 wherein the step of dividing comprises dividing the peak value by the integral.

3. The method of claim 1 wherein the step of labeling the sample comprises diluting the sample with a diluent comprising fluorescent antibodies reactive to white blood cells and allowing the antibodies to react to the blood sample.

4. The method of claim 1 wherein the step of obtaining the sample comprises the step of diluting the whole blood without lysing the red cells in the sample.

5. The method of claim 4 wherein the blood is diluted in a ratio of blood to diluent of between approximately 1:7 and 1:10.

6. The method of claim 1 further comprising the steps of:
    obtaining the log of the integral of the electrical signal;
    obtaining the log of the peak value; and
    wherein the step of dividing is performed by subtracting the log of the integral from the log of the peak value.

7. The method of claim 1 further comprising the steps of:
    obtaining the log of the integral of the electrical signal;
    obtaining the log of the peak value; and
    wherein the step of dividing is performed by subtracting the log of the peak value from the log of the integral.

8. The method of claim 1 wherein the step of illuminating the sample comprises illuminating, the sample with a light beam having a height approximately less than or equal to the diameter of a cell of interest in the sample.

9. The method of claim 8 wherein the height of the light beam is less than the diameter of a lymphocyte.

10. The method of claim 8 wherein the height of the light beam is approximately 7

FIG-1

FIG-2

# FIG-3

# FIG-4a

BASELINE RESTORER

EP 0 585 754 A1

FIG-4b

FIG-4c

# FIG-4d

FROM FIG-4C

48

C110 150PF

D40 1N4148

R131 2K,1%

R84 1K,POT

+15V

C111 .1UF

U28

TP12 TP

52b

+15V

R129 20K,POT

R130 1K

C109 .1UF

3 +
7
2 −
AD744
4

1
8
6
5

1

LOG $V_{RI}$

C112 .1UF

−15V

EP 0 585 754 A1

# FIG-4e

EP 0 585 754 A1

# FIG-4f

EP 0 585 754 A1

# FIG-4g

58

EP 0 585 754 A1

FIG—4h

66

U34

| | | |
|---|---|---|
| S1 | 0 | 8 |
| S2 | A0 | 1 |
| S3 | A1 | 16 |
| S4 | A2 | 16 |
| S5 | EN | 2 |
| S6 | V+ | 13 |
| S7 | V− | 3 |
| S8 | GND | 14 |

DG 508

$V_{PR}$ — 4
$V_{PY}$ — 5
$V_{PR} - V_P$ — 6
7
12
11
10
9

ID0
ID1
ID2

SELECT
(FROM 56,
FIG—4f)

+5V
+15V
−15V

C130 .1UF
C131 .1UF

FIG-4i

# FIG-5

EP 0 585 754 A1

FIG-6a

NO SIZE GATE

FIG-6b

FIG-6c

SIZE GATE 0-150

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 765 737 (W. V. HARRIS ET AL.) * abstract * | 1,2 | G01N15/14 |
| Y | | 6,7 | |
| X | US-A-4 021 117 (H. GÖHDE ET AL.) * abstract; figure 8A * | 1 | |
| Y | REVIEW OF SCIENTIFIC INSTRUMENTS vol. 55, no. 9, September 1984, NEW YORK US pages 1375 - 1400 J. A. STEINKAMP 'Flow cytometry' * page 1384, paragraph 5 - page 1385; figure 11 * | 6,7 | |
| X | US-A-4 882 284 (S. J. KIRCHANSKI ET AL.) * abstract * | 3-5 | |
| A | US-A-4 983 359 (A. TOMIOKA ET AL.) * abstract * * column 1 * | 3 | TECHNICAL FIELDS SEARCHED (Int. Cl.5 ) |
| X | US-A-4 263 508 (J. F. LEARY ET AL.) * column 3, line 23 - line 29 * | 8-10 | G01N |
| A | EP-A-0 029 662 (ORTHO DIAGNOSTICS INC.) * abstract * | 1 | |
| A | EP-A-0 335 001 (TOA MEDICAL ELECTRONICS CO., LTD.) * abstract; figure 1 * | 1 | |

The present search report has been drawn up for all claims

| Place of search | Date of completion of the search | Examiner |
|---|---|---|
| BERLIN | 21 DECEMBER 1993 | BRISON O.P. |

EPO FORM 1503 03.82 (P0401)